# EUROPÄISCHE PATENTSCHRIFT

(11) **EP 2 550 126 B1**
(45) Veröffentlichungstag und Bekanntmachung des Hinweises auf die Patenterteilung: **05.10.2016**
(21) Anmeldenummer: 11710768.0
(22) Anmeldetag: 23.03.2011
(51) Int. Cl.: B23D 77/00

(54) **HOCHLEISTUNGSREIBAHLE MIT KÜHLMITTELKANÄLEN**
HIGH PERFORMANCE REAMER WITH COOLANT DUCTS
ALÉSOIR AVEC CANAUX DE REFROIDISSEMENT

(30) Priorität: 07.05.2010 DE 102010019840; 05.05.2010 DE 102010019598; 25.03.2010 DE 102010012959; 26.05.2010 DE 102010021520
(43) Veröffentlichungstag der Anmeldung: 30.01.2013
(73) Patentinhaber: Gühring OHG, 72458 Albstadt (DE)
(72) Erfinder: SCHANZ, Gerhard, 72393 Burladingen (DE); BECK, Manfred, 72488 Sigmaringen (DE)
(74) Vertreter: Meitinger, Thomas Heinz
(86) Internationale Anmeldenummer: PCT/EP2011/054493
(87) Internationale Veröffentlichungsnummer: WO 2011/117319

(56) Entgegenhaltungen:
- EP-A1- 1 160 042
- EP-A2- 0 157 114
- WO-A1-2005/061164
- WO-A1-2009/057087
- WO-A2-98/39127
- CH-A- 379 882
- CN-U- 2 077 769
- DE-A1- 4 128 028
- DE-A1- 10 348 061
- DE-A1- 19 739 343
- DE-A1-102005 014 337
- DE-A1-102005 024 823
- DE-A1-102008 023 814
- DE-A1-102008 027 945
- DE-T2- 69 101 365
- DE-U1- 8 511 133
- DE-U1- 20 101 101
- DE-U1-202004 009 549
- GB-A- 1 007 715
- JP-A- 8 323 541
- JP-A- 59 152 012
- JP-A- H11 320 213
- US-A- 2 092 984
- US-A- 3 182 531

## Beschreibung

### GEBIET DER ERFINDUNG

Die vorliegende Erfindung betrifft eine Hochleistungsreibahle zur Nachbearbeitung einer Bohrung eines Werkstücks.

### HINTERGRUND DER ERFINDUNG

Im Stand der Technik sind Hochleistungsreibahlen bekannt, die zur Feinbearbeitung von Bohrungen durch Reiben dienen können, wobei hierdurch insbesondere eine Verbesserung der Oberflächengüte erreicht werden soll. Die DE 4128028 A1 beschreibt ein Reibwerkzeug, das einen Vollhartmetallstab mit schraubenförmig in den Führungsdurchmesser eingeschliffenen Spannuten aufweist. Das Dokument WO 98/39127 offenbart ein Reib- und Senk-Schneidwerkzeug mit einem Verstellmittel. Die DE 19739343 A1 beschreibt eine Reibahle mit innerer Kühlmittelzufuhr. Die DE 10 2005 014 337 A1 offenbart eine Hochleistungsreibahle gemäß dem Oberbegriff des Anspruchs 1.

### ZUSAMMENFASSUNG DER ERFINDUNG

Die Aufgabe der Erfindung ist eine Hochleistungsreibahle zu Verfügung zu stellen, bei der die Versorgung von Kühl- bzw. Schmiermittel optimiert wird.

Gemäß der Erfindung wird eine Hochleistungsreibahle zur Nachbearbeitung einer Bohrung eines Werkstücks zur Verfügung gestellt, wobei die Hochleistungsreibahle umfasst: mindestens zwei Kühlkanäle zur Versorgung von jeweils einer Spannut, wobei die Kühlkanäle im Wesentlichen entlang der Längsachse der Hochleistungsreibahle angeordnet sind, wobei die Kühlkanäle dezentral ausgebildet sind, wobei jeweils zwei Kühlkanäle mit einem Mittelpunkt der Hochleistungsreibahle Winkel aufspannen, und wobei die Winkel 20°, 30°, 40°, 50°, 60°, 70°, 80°, 90° oder einen beliebigen Winkelwert aufweisen, dadurch gekennzeichnet, dass die Kühlkanäle jeweils eine einzige Austrittsöffnung aufweisen, wobei die Spannuten in Richtung der Längsachse gestaffelt eingeschliffen sind und die Austrittsöffnungen sich gestaffelt in Richtung der Längsachse innerhalb der Spannuten ergeben.

Gemäß einer bevorzugten Ausführungsform der erfindungsgemäßigen Hochleistungsreibahle kann durch eine Anordnung von ungleichmäßig bzw. unsymmetrisch auf einem Kreis verteilten Kühlkanälen einer ungleichmäßig bzw. unsymmetrischen Anordnung von Hauptschneiden und dazugehörenden Spannuten Rechnung getragen werden und dennoch sicher gestellt werden, dass die Kühlkanäle direkt (ohne das Anordnen weiterer Kanalabschnitte) in jeweilige Spannuten münden können.

Im Stand der Technik sind z.B. Reibahle bekannt, die einen Kühlkanal aufweisen, wobei der Kühlkanal axial verlaufend angeordnet ist, und wobei der Kühlkanal zentral ausgebildet ist, d.h. dass die Längsachse des Kühlkanals mit der Längsachse der Reibahle zusammenfällt. Um Spannuten mit Kühlund/oder Schmiermittel zu versorgen, muss daher eine Verbindung von der entsprechenden Spannut zu dem zentralen Kühlkanal geschaffen werden. Diese Verbindung wird üblicherweise durch Elektroerodieren hergestellt. Allerdings hat das Elektroerodieren zur Folge, dass sich die Materialeigenschaften in dem dem Verbindungsabschnitt angrenzenden Bereich ändern, und zwar dass insbesondere dieser angrenzende Bereich in seiner mechanischen Stabilität geschwächt wird. Ferner führt der quasi zweiteilige Aufbau des Kühlkanals dazu, dass das Kühl- und/oder Schmiermittel umgelenkt werden muss, da kein gerader Fluss mehr möglich ist. Ein Umlenken, hier ca. um 90°, hat bei einer Schmierung der Schneiden des spanenden Werkzeugs mit Minimalmengenschmierung ein Entmischen des Luft-/Ölgemisches zur Folge, weswegen bei einer wie hier beschriebenen Reibahle des Stands der Technik eine Minimalmengenschmierung nicht möglich ist.

Im Gegensatz hierzu kann ein Kühlkanal der erfindungsgemäßen Hochleistungsreibahle geradlinig zu der zu versorgenden Spannut führen und benötigt zur Versorgung der Schneiden der Reibahle keine weiteren Bohrungen bzw. Durchbrechungen, weswegen zusätzliche Arbeitschritte bzw. aufgrund der weiteren Arbeitsschritte sich ergebende Schwächungen der mechanischen Stabilität der Reibahle vermieden werden können.

Gemäß einer bevorzugten Ausführungsform der erfindungsgemäßen Hochleistungsreibahle wird ein Kühlkanalsystem zur Verfügung gestellt, wobei die Winkelwerte am Reibwerkzeug alternierend ausgebildet sind.

Gemäß einer weiteren bevorzugten Ausführungsform der erfindungsgemäßen Hochleistungsreibahle können die Kühlkanäle auf einem Kreis, dessen Mittelpunkt mit der Längsachse des Bohr-, Dreh-, Fräs- oder Reibwerkzeugs zusammenfällt, beliebig, auch unsymmetrisch, angeordnet werden, wodurch sich zwischen den einzelnen Kühlkanälen unterschiedliche Winkelwerte ergeben können. In einer alternativen Anordnung können sich auch alternierende Winkelwerte ergeben, beispielsweise können die Winkelwerte zwischen den Kühlkanälen 50°, 60°, 70°, 50°, 60°, 70° sein oder beliebige andere Winkelwertsequenzen aufweisen, die alternierend oder vollständig unsymmetrisch ausfallen können.

Weitere Einzelheiten und Vorteile der Erfindung werden anhand der in den Zeichnungen dargestellten Ausführungsbeispiele deutlich. Es zeigen
Fig. 1 eine Hochleistungsreibahle, die nicht sämtliche Merkmale des Anspruchs aufweist aber das Verständnis der Erfindung erleichtert, in einer perspektivischen Ansicht,
Fig. 2 eine weitere Hochleistungsreibahle, die nicht sämtliche Merkmale des Anspruchs aufweist aber das Verständnis der Erfindung erleichtert, in einer perspektivischen Ansicht,
Fig. 3 eine weitere Hochleistungsreibahle, die nicht sämtliche Merkmale des Anspruchs aufweist aber das Verständnis der Erfindung erleichtert, in einer schematischen Darstellung,
Fig. 4 eine weitere Hochleistungsreibahle, die nicht sämtliche Merkmale des Anspruchs aufweist aber das Verständnis der Erfindung erleichtert, in einer schematischen Darstellung,
Fig. 5 eine weitere Hochleistungsreibahle, die nicht sämtliche Merkmale des Anspruchs aufweist aber das Verständnis der Erfindung erleichtert, in einer schematischen Darstellung,
Fig. 6 eine weitere Hochleistungsreibahle, die nicht sämtliche Merkmale des Anspruchs aufweist aber das Verständnis der Erfindung erleichtert, in einer perspektivischen Ansicht,
Fig. 7 eine weitere Hochleistungsreibahle, die nicht sämtliche Merkmale des Anspruchs aufweist aber das Verständnis der Erfindung erleichtert, in einer Vorderansicht,
Fig. 8 eine weitere Hochleistungsreibahle, die nicht sämtliche Merkmale des Anspruchs aufweist aber das Verständnis der Erfindung erleichtert, in einer perspektivischen Ansicht,
Fig. 9 eine weitere Hochleistungsreibahle, die nicht sämtliche Merkmale des Anspruchs aufweist aber das Verständnis der Erfindung erleichtert, in einer Rückansicht,
Fig. 10 eine weitere Hochleistungsreibahle, die nicht sämtliche Merkmale des Anspruchs aufweist aber das Verständnis der Erfindung erleichtert, in einer perspektivischen Ansicht,
Fig. 11 eine weitere Hochleistungsreibahle, die nicht sämtliche Merkmale des Anspruchs aufweist aber das Verständnis der Erfindung erleichtert, in einer perspektivischen Ansicht,
Fig. 12 eine erfindungsgemäße Hochleistungsreibahle,
Fig. 13 eine weitere erfindungsgemäße Hochleistungsreibahle,
Fig. 14 eine weitere erfindungsgemäße Hochleistungsreibahle,
Fig. 15 eine weitere erfindungsgemäße Hochleistungsreibahle.

### DETAILLIERTE BESCHREIBUNG BEISPIELHAFTER AUSFÜHRUNGSFORMEN

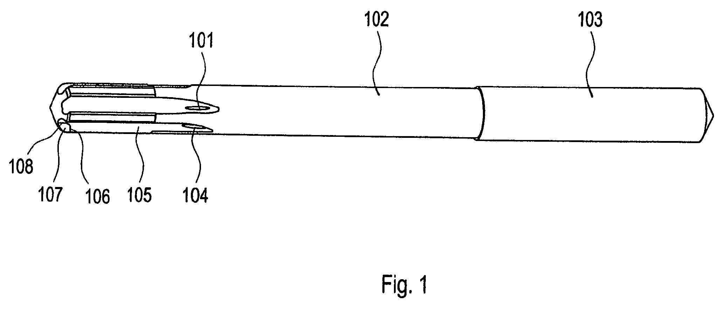

Fig. 1 zeigt eine Hochleistungsreibahle, die nicht sämtliche Merkmale des Anspruchs aufweist aber das Verständnis der Erfindung erleichtert, mit einem Abschnitt 103 des Schaftes zum Einspannen und einem restlichen Schaft, der als Hals 102 bezeichnet werden kann. Die Hochleistungsreibahle weist gerade Spannuten 105 auf, in die Kühlkanäle 101, 104 zur Förderung von Kühl- und/oder Schmiermittel münden. An der Hochleistungsreibahle werden Schälanschnitte durchgeführt, welche zu einer oder mehreren Flächen 107 an der Hochleistungsreibahle führen. Die Schälabschnitte werden derart durchgeführt, dass sich zwischen einer Fläche 107 und der Spannut 105 eine Kante 106, 108 herausgebildet wird. Die Kante 106, 108 weist einen ungefähr axial verlaufenden Abschnitt 108 und einen ungefähr radial verlaufenden Abschnitt 106 auf.

Die Kante 106, 108 stellt eine Störkante für Späne dar, wobei die Späne aufgrund der Kante 106, 108 gebrochen werden können. Die Kante 106, 108 kann hierbei je nach Anwendung, z.B. Bearbeitung von Werkzeugstählen, Messing oder Aluminium, ausgeprägter oder weniger ausgeprägt ausgebildet sein, um anfallende Späne brechen zu können.

Hochleistungsreibahle nach dem Stand der Technik weisen einen zentralen Kühlkanal auf, wobei dieser Kühlkanal mit radial verlaufenden Kanalabschnitten "angezapft" werden kann, um die Spannuten mit Kühl- und/oder Schmiermittel versorgen zu können. Die radial verlaufenden Kanalabschnitte werden hierbei insbesondere durch Elektroerodieren hergestellt, wobei sich die Materialeigenschaften der Randgebiete um diese Kanalabschnitte verändern können. Die Änderung der Materialeigenschaften kann insbesondere eine Schwächung der betroffenen Bereiche zur Folge haben, wodurch diese Bereiche eher zu Ausbrüchen neigen können. Ferner ist bei diesen Kühlkanälen des Stands der Technik mit mindestens zwei Kanalabschnitten ein Umlenken des Kühl- und/oder Schmiermittelstroms erforderlich, da der Kühl- und/oder Schmiermittelstrom bei seinem Weg zur Spannut zunächst einen axial verlaufenden Kanalabschnitt und darauf einen radial verlaufenden Kanalabschnitt entlang strömen muss. Dieses Umlenken des Kühl- und/oder Schmiermittelstroms kann bei einer Minimalmengenschmierung (MMS) ein Entmischen des Luft-/Öl-Gemischs zur Folge haben, wodurch eine effektive Schmierung nicht mehr gewährleistet sein kann. Im Gegensatz hierzu weist die Hochleistungsreibahle der Fig. 1 einen Kühlkanal auf, der nicht zentral verlaufend angeordnet ist. Hierbei ist der Kühlkanal 101, 104 derart angeordnet, dass bei der Herstellung einer Spannut 105, z.B. durch Schleifen, sich automatisch eine Austrittsöffnung des Kühlkanals 104 zur Versorgung der Spannut 105 mit Kühl- und/oder Schmiermittel ergeben kann. Als Folge davon kann eine nachträgliche Anordnung von radial verlaufenden Kanalabschnitten, wie bei den Hochleistungsreibahlen des Stands der Technik erforderlich, vermieden werden. Aus diesem Grund kann eine Materialschwächung durch Elektroerodieren bei den erfindungsgemäßen Hochleistungsreibahlen vermieden werden. Ferner kann eine Versorgung der Schneiden der Hochleistungsreibahle über die Kühlkanäle 101, 104 mit einer Minimalmengenschmierung erfolgen, da ein Entmischen des Luft-/Ölgemisches durch geradlinigen Fluss des Kühl- und/oder Schmiermittelstromes verhindert werden kann.

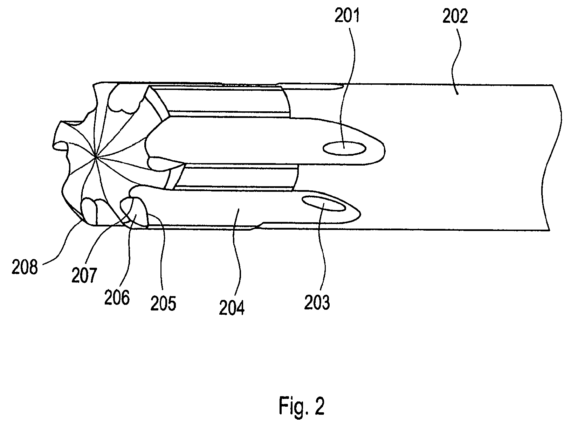

Fig. 2 zeigt eine Hochleistungsreibahle, die nicht sämtliche Merkmale des Anspruchs aufweist aber das Verständnis der Erfindung erleichtert, mit einem Hals 202 und Kühlkanälen 201, 203 für Kühl- und/oder Schmiermittel, die in Spannuten 204 münden. Beispielsweise kann die Hochleistungsreibahle sechs Hauptschneiden 208 aufweisen. In einer alternativen Ausführungsform kann die Hochleistungsreibahle auch 2, 3, 4, 5, 7, 8, 9, 10, 11, 12 oder beliebig viele Hauptschneiden aufweisen. An der Hochleistungsreibahle wird durch einen oder mehrere Schälanschnitte eine oder mehrere Flächen 206 erzeugt. Die Fläche 206 ist durch eine Kante 205, 207 gegenüber der Spannut 204 abgegrenzt. Die Kante 205, 207 kann in zwei Abschnitte 205, 207 unterteilt werden, wobei ein ungefähr axial verlaufender Abschnitt 207 in einen ungefähr radial verlaufenden Abschnitt 205 übergehen kann. Die Fläche 206 bildet einen Teil eines Spanleitsystems, wobei durch eine Hauptschneide 208 anfallende Späne durch die Fläche 206 geführt und zu der Kante 205, 207 geleitet werden können, an der die Späne dann letzten Endes gebrochen werden können.

Die Hochleistungsreibahle weist axial verlaufende Kühlkanäle auf, die dezentral angeordnet sind, wobei die Kühlkanäle einen geraden Fluss des Kühl- und/oder Schmiermittels zur Spannut ermöglichen.

Eine Entmischung eines Luft-/Ölgemisches einer Minimalmengenschmierung kann hierdurch verhindert werden. Ferner kann ein nachträgliches Elektroerodieren zur Herstellung von Verbindungskanälen zwischen einem zentral angeordneten Kühlkanal und den Spannuten bei der erfindungsgemäßen Hochleistungsreibahle vermieden werden.

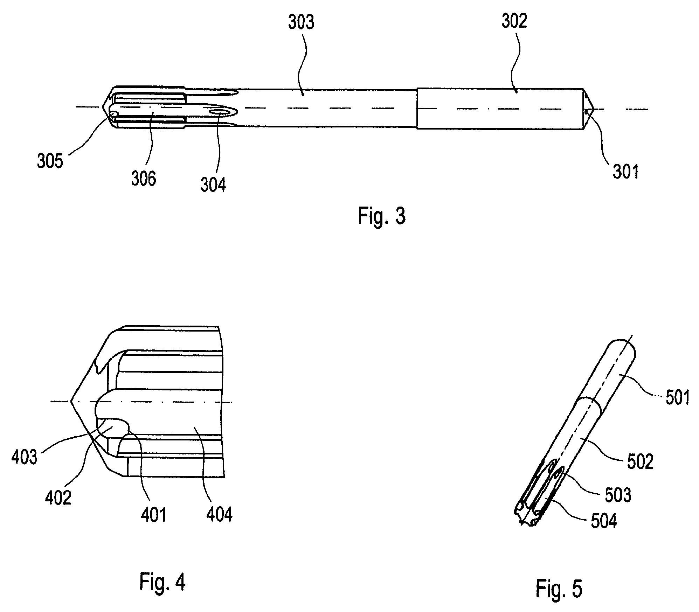

Fig. 3 zeigt eine Hochleistungsreibahle, die nicht sämtliche Merkmale des Anspruchs aufweist aber das Verständnis der Erfindung erleichtert, mit einem Schaftabschnitt 302 zum Einspannen und einem Hals 303. Ferner weist die Hochleistungsreibahle Kühlkanäle mit Eintrittsöffnungen 301 und Austrittsöffnungen 304 auf. Die Austrittsöffnungen 304 leiten das Kühl- und/oder Schmiermittel zu Spannuten 306. An der Hochleistungsreibahle wurde zumindest ein Schälanschnitt durchgeführt, wodurch sich zumindest eine Fläche 305 ergibt, die derart ausgebildet ist, dass die Fläche 305 als Teil eines Spanleitsystems genutzt werden kann.

Fig. 4 zeigt die Hochleistungsreibahle der Fig. 3 mit der Spannut 404 und der Fläche 402, die durch einen Schälanschnitt entstanden ist. Die Spannut 404 und die Fläche 402 werden durch die Kante 401, 403 voneinander getrennt, wobei die Kante 401, 403 ein Teil des Spanleitsystems darstellt und sicher stellen kann, dass bei einer Hochleistungsreibahle im Einsatz möglichst nur kleine Späne entstehen können.

Fig. 5 zeigt eine Hochleistungsreibahle, die nicht sämtliche Merkmale des Anspruchs aufweist aber das Verständnis der Erfindung erleichtert, mit Schaftabschnitten 501, 502, Austrittsöffnungen 503 von Kühlkanälen und Spannuten 504.

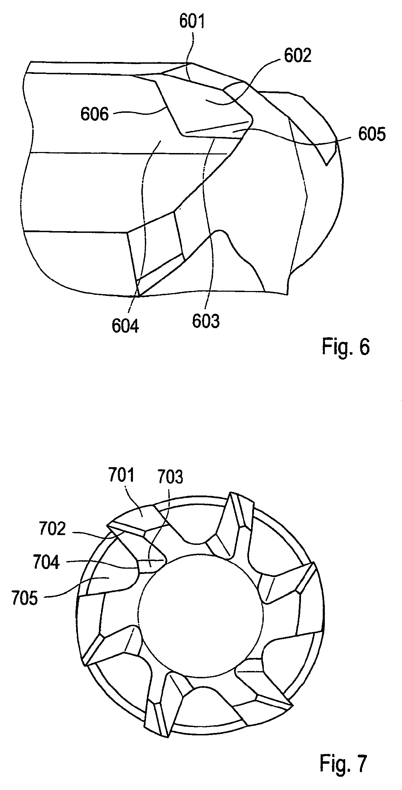

Fig. 6 zeigt eine Hochleistungsreibahle, die nicht sämtliche Merkmale des Anspruchs aufweist aber das Verständnis der Erfindung erleichtert, mit einer Hauptschneide 601, wobei sich durch zumindest einen Schälanschnitt Flächen 602, 605 ergeben, die zusammen mit einer Spannut 604 zu Kanten 603, 606 führen. Die durch die Hauptschneide 601 erzeugten Späne werden durch die Kanten 603, 606 gebrochen, wodurch sich vorwiegend nur kleine Späne ergeben können.

Fig. 7 zeigt eine Hochleistungsreibahle, die nicht sämtliche Merkmale des Anspruchs aufweist aber das Verständnis der Erfindung erleichtert, in einer Vorderansicht, wobei die Reibahle sechs Hauptschneiden 702 aufweist, an die sich jeweils Freiflächen 701 anschließen. Die Spannut 705 grenzt an eine durch mindestens einen Schälanschnitt erzeugte Fläche 703 an, wobei die Grenze zwischen Spannut 705 und Fläche 703 eine Kante 704 bildet, die als Störkante angeordnet ist. Durch die Fläche 703 werden durch die Hauptschneide 702 anfallende Späne geführt, und zwar derart, dass die Späne auf die Kante 704 geleitet werden. Die Kante 704 ist derart ausgebildet, d.h. z.B. derart hoch erhoben angeordnet, dass die Späne durch die Kante 704 gebogen bzw. gebrochen werden.

Die Kombination aus Fläche 703, Kante 704 und Spannut 705 ist daher als Spanleitsystem bzw. Spanleitstufe ausgebildet.

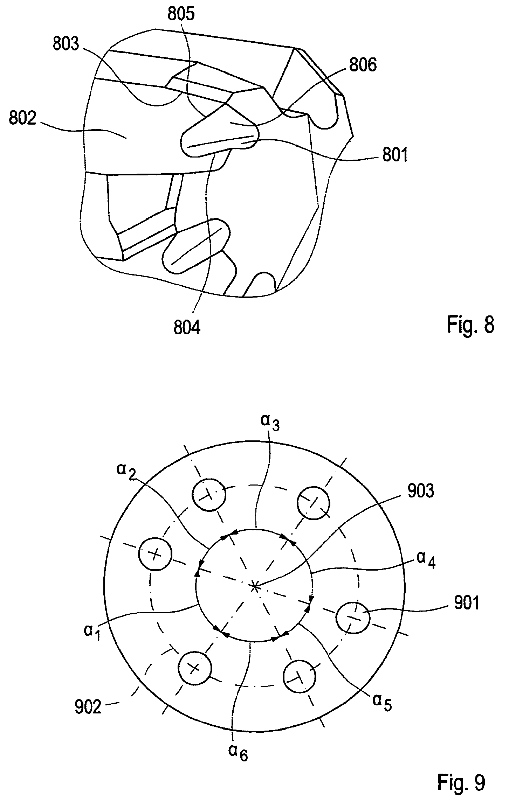

Fig. 8 zeigt eine Hochleistungsreibahle, die nicht sämtliche Merkmale des Anspruchs aufweist aber das Verständnis der Erfindung erleichtert, mit Hauptschneiden 803, die Spannuten 802 aufweisen und Flächen 801, die sich durch einen Schälanschnitt ergeben. Ferner ist zwischen der Fläche 801 und der Spannut 802 eine Kante 804 ausgebildet.

Fig. 9 zeigt eine Hochleistungsreibahle, die nicht sämtliche Merkmale des Anspruchs aufweist aber das Verständnis der Erfindung erleichtert, in einer Rückansicht, wobei sechs Kühlkanäle 901 dargestellt sind, die axial verlaufend ausgebildet sind, aber nicht zentral angeordnet sind. Die Kühlkanäle 901 werden dabei derart angeordnet, dass für jede Spannut ein Kühlkanal 901 vorgesehen ist, der in die Spannut mündet, wobei ein gerader Fluss des Kühl- und/oder Schmiermittelstroms gewährleistet ist, wodurch eine Entmischung eines Luft-/Ölgemisches bei einer Minimalmengenschmierung verhindern werden kann.

In Fig. 9 ist eine Hochleistungsreibahle, die nicht sämtliche Merkmale des Anspruchs aufweist aber das Verständnis der Erfindung erleichtert, dargestellt, wobei jeweils zwei Kühlkanäle 901 mit dem Mittelpunkt 903 einen Winkel aufspannen. Hierbei können die Winkel α₁, α₂, α₃, α₄, α₅, α₆ aufgespannt werden, wobei die Winkel α₁ und α₄ einen Wert von ca. 70°, die Winkel α₂ und α₅ einen Wert von ca. 50° und die Winkel α₃ und α₆ einen Wert von ca. 60° aufweisen können. In einer alternativen Hochleistungsreibahle kann auch eine gleiche Teilung mit gleichen Winkelwerten vorgenommen werden. In weiteren alternativen Hochleistungsreibahlen kann eine beliebige Anzahl von Kühlkanälen, entsprechend der Anzahl der Spannuten, angeordnet werden, die entsprechend einer gleichmäßigen Teilung oder einer beliebigen Teilung angeordnet werden können. Zwischen den einzelnen Kühlkanälen können dabei beispielsweise Winkel von 20°, 30°, 40°, 50°, 60°, 70° oder 80° ausgebildet werden, wobei zwischen den einzelnen Kühlkanälen Winkel mit gleichen oder unterschiedlichen Winkelwerten ausgeformt sein können.

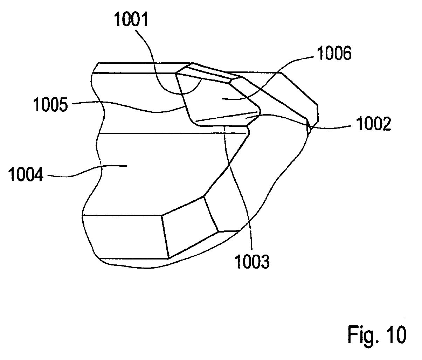

Fig. 10 zeigt eine Hochleistungsreibahle, die nicht sämtliche Merkmale des Anspruchs aufweist aber das Verständnis der Erfindung erleichtert, mit einer Hauptschneide 1001, wobei aufgrund eines Schälanschnitts Flächen 1002, 1006 erzeugt werden, die zu Kanten 1003, 1005 zwischen den Flächen 1002, 1006 und der Spannut 1004 führen. Die Flächen 1002, 1006 führen von der Hauptschneide 1001 anfallende Späne zu den Kanten 1003, 1005, wo diese durch die Kanten 1003, 1005 gebrochen werden.

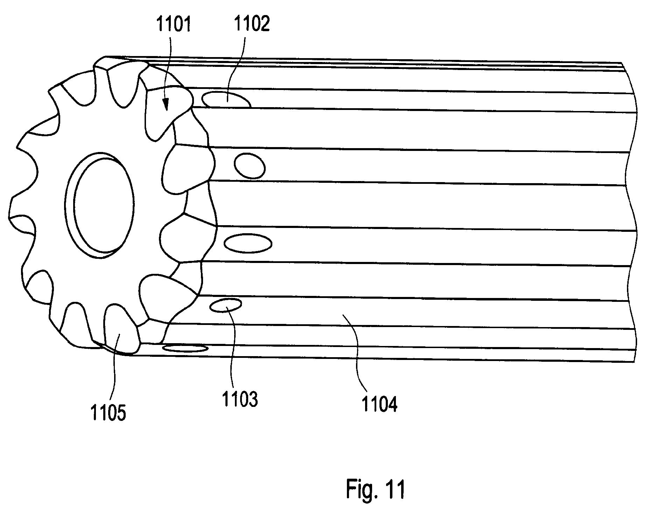

Fig. 11 zeigt eine weitere Hochleistungsreibahle, die nicht sämtliche Merkmale des Anspruchs aufweist aber das Verständnis der Erfindung erleichtert, in einer beispielhaften Ausführungsform mit zwölf Schneiden 1101. Die Hochleistungsreibahle ist als mehrzahniges, insbesondere hochzahniges, Schneidwerkzeug ausgeführt und weist dabei zwölf oder auch mehr als zwölf Schneiden, z.B. 13, 14, 15, 16, 17, 18, 19, 20 oder mehr Schneiden, auf. Die Hochleistungsreibahle kann auch weniger als zwölf Schneiden aufweisen. In der Nachbarschaft einzelner oder aller Schneiden 1101 sind Austrittsöffnungen von Kühlkanälen 1102, 1103 angeordnet. Die Austrittsöffnungen 1102, 1103 aller oder mehrerer Austrittsöffnungen liegen auf einer Schnittebene, die senkrecht zur Längsachse der Hochleistungsreibahle ausgerichtet ist. In einer alternativen Ausführungsform kann jede Austrittsöffnung auf einer jeweils unterschiedlichen Schnittebene liegen, wobei die Schnittebenen senkrecht zur Längsachse der Hochleistungsreibahle angeordnet sind. Die Kühlkanäle sind radial ausgerichtet. In einer alternativen Hochleistungsreibahle können die Kühlkanäle eine Längsachse aufweisen, die nicht senkrecht zur Längsachse der Hochleistungsreibahle ausgerichtet ist. In diesem Fall sind die Kühlkanäle nicht radial ausgerichtet, sondern sind zu einer radialen Richtung geneigt ausgebildet. Die Austrittsöffnungen 1102 weisen in diesem Fall keine kreisflächigen Austrittsöffnungen auf wie bei radial ausgerichteten Kühlkanälen, sondern die Ränder der Austrittsöffnungen sind ellipsenförmig ausgebildet. In einer alternativen Hochleistungsreibahle kann die Hochleistungsreibahle teilweise kreisflächige Austrittsöffnungen 1103 von Kühlkanälen und/oder teilweise ellipsenförmige Austrittsöffnungen 1102 von Kühlkanälen aufweisen. Einzelne oder alle Austrittsöffnungen von Kühlkanälen können in einer alternativen Hochleistungsreibahle in einer Spannut 1105 liegen. In einer weiteren alternativen Hochleistungsreibahle werden einzelne oder alle Austrittsöffnungen in jeweils einer Führungsfase 1104 angeordnet.

Die Hochleistungsreibahle kann einen oder mehrere dezentrale Kühlkanäle aufweisen, deren Austrittsöffnungen sich beim Ausschleifen einer oder mehrerer Führungsfasen 1104 ergeben. In diesem Fall mündet mindestens ein Kühlkanal in eine Führungsfase. In einer weiteren alternativen Hochleistungsreibahle mündet in jede Führungsfase mindestens ein bzw. genau ein Kühlkanal. Alternativ weist die Hochleistungsreibahle mehrere Austrittsöffnungen von Kühlkanälen auf, wobei die Kühlkanäle jeweils in eine Führungsfase münden, d.h. die jeweiligen Austrittsöffnungen sind in jeweils einer Führungsfase angeordnet, wobei die Austrittsöffnungen in unterschiedlichen Schnittebenen liegen, wobei die Schnittebenen senkrecht zur Längsachse der Hochleistungsreibahle ausgerichtet sind. Durch das Ausschleifen einer Führungsfase kann sich daher eine Austrittsöffnung eines dezentral ausgerichteten Kühlkanals ergeben, weshalb durch die Länge bzw. radiale Tiefe des Ausschleifens die Anordnung der Austrittsöffnung in axialer Richtung ergeben kann. In einer weiteren alternativen Ausführungsform einer Hochleistungsreibahle können einzelne oder alle Austrittsöffnungen von Kühlkanälen zwischen jeweils einer Spannut und einer benachbarten Führungsfase angeordnet werden. In einer weiteren alternativen Ausführungsform besteht die Hochleistungsreibahle vollständig aus Hartmetall. In diesem Fall läge also eine Vollhartmetall-Hochleistungsreibahle vor.

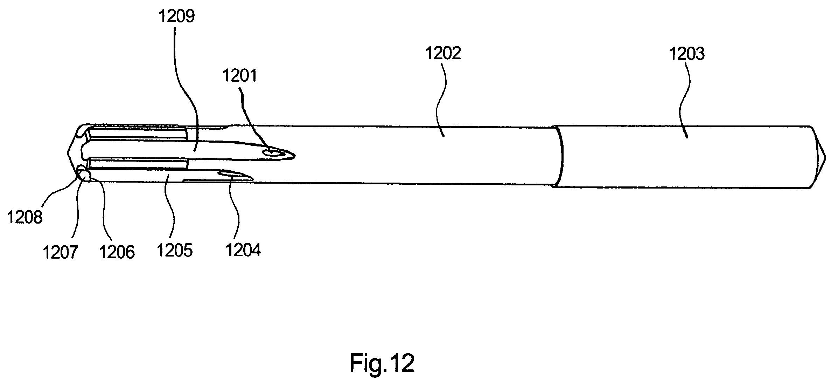

Fig. 12 zeigt eine erfindungsgemäßige Hochleistungsreibahle mit Austrittsöffnungen 1201, 1204 für dezentrale Kühlmittelkanäle, wobei sich die Austrittsöffnungen 1201, 1204 durch Aufschleifen bzw. bei der Herstellung der Spannuten ergeben. Erfindungsgemäß werden Spannuten 1209 weiter in Richtung des Einspannschaftes 1203 geschliffen bzw. werden Spannuten 1205 weniger weit in Richtung des Einspannschaftes 1203 geschliffen. Im ersten Fall ergeben sich Austrittsöffnungen 1201, die weiter von der Hauptschneide entfernt angeordnet sind, wodurch Kühl- und/oder Schmiermittel stärker verteilt bzw. weiter aufgefächert auf die Schneiden/Werkzeugschneiden/Hauptschneiden gerichtet werden können. Falls die Spannuten 1205 weniger weit in Richtung des Einspannschaftes 1203 geschliffen werden, sind Austrittsöffnungen 1204 erhalten, die näher an den Werkzeugschneiden angeordnet sind und daher gezielter und genauer Kühl- und/oder Schmiermittel auf die Werkzeugschneiden richten.

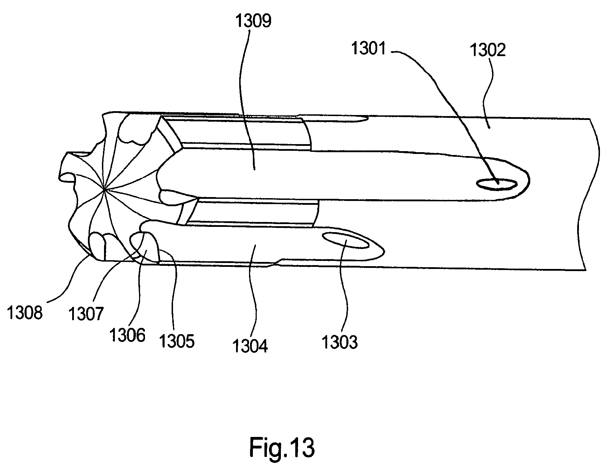

Fig. 13 zeigt eine erfindungsgemäße mit einer Spannut 1309, die weit in Richtung des Halses 1302 des Werkzeugs eingeschliffen ist, wodurch sich eine Austrittsöffnung 1301 ergibt, die weit von den Werkzeugschneiden/Hauptschneiden 1308 entfernt angeordnet ist. Hierdurch kann sich ein Kühl- und/oder Schmiermittelstrom auf die Werkzeugschneiden 1308 ergeben, der größer verteilt ausgebildet ist. Erfindungsgemäß werden Werkzeuge zur Verfügung gestellt, deren Spannuten unterschiedlich weit in den Schaft eingeschliffen sind.

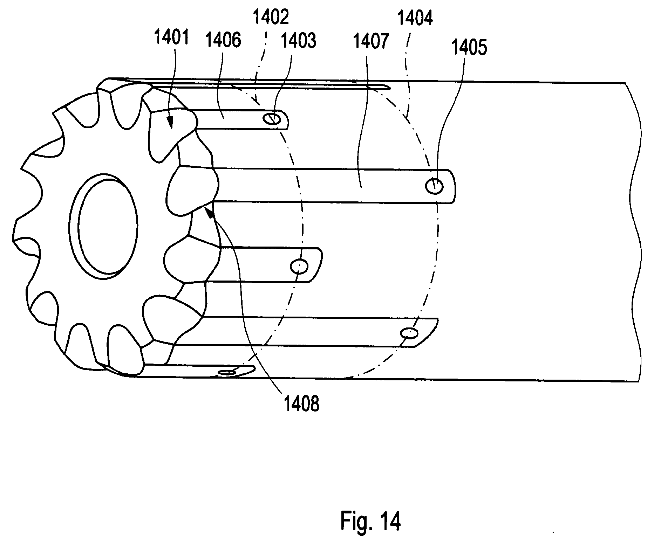

Fig. 14 zeigt eine erfindungsgemäße Hochleistungsreibahle mit Werkzeugschneiden 1401, 1408 wobei in das Werkzeug unterschiedlich weit Spannuten 1406, 1407 eingeschliffen sind, wodurch sich Austrittsöffnungen 1403, 1405 ergeben, die unterschiedlich weit von den Werkzeugschneiden 1401, 1408 angeordnet sind. Die Austrittsöffnungen 1403, 1405 sind in unterschiedlichen Querschnittsebenen 1402, 1404 angeordnet. Die Querschnittsebenen 1402, 1404 sind senkrecht zu einer Längsachse des Werkzeugs ausgerichtet. Sind die Austrittsöffnungen 1403 näher an den Werkzeugschneiden 1401 angeordnet, so werden die Werkzeugschneiden 1401 gezielter mit Kühl- und/oder Schmiermittel versorgt. Sind die Austrittsöffnungen 1405 weiter entfernt von den Werkzeugschneiden 1408 angeordnet, so werden die Werkzeugschneiden 1408 mit einem stärker aufgefächerten Kühl- und/oder Schmiermittelstrahl versorgt.

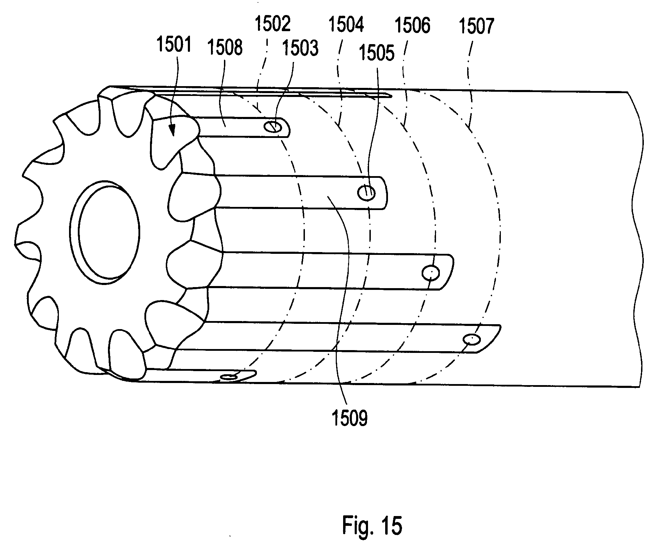

Fig. 15 zeigt ein erfindungsgemäßige Werkzeug mit dezentralen Kühlmittelkanälen, wobei Spannuten 1508, 1509 gestaffelt bzw. unterschiedlich weit in das Werkzeug in Richtung des Schaftes eingeschliffen sind. Hierdurch ergeben sich Austrittsöffnungen 1503, 1505, die auf unterschiedlichen Querschnittsebenen 1502, 1504, 1506, 1507 angeordnet sind.

### LISTE DER BEZUGSZEICHEN

- 101: Kühlkanal
- 102: Hals
- 103: Einspannabschnitt
- 104: Kühlkanal
- 105: Spannut
- 106: Kante
- 107: Fläche
- 108: Kante
- 201: Austrittsöffnung Kühlkanal
- 202: Hals
- 203: Austrittsöffnung Kühlkanal
- 204: Spannut
- 205: Kante
- 206: Fläche
- 207: Kante
- 208: Hauptschneide
- 301: Eintrittsöffnung Kühlkanal
- 302: Einspannabschnitt
- 303: Hals
- 304: Austrittsöffnung Kühlkanal
- 305: Fläche
- 306: Spannut
- 401: Kante
- 402: Fläche
- 403: Kante
- 404: Spannut
- 501: Einspannabschnitt
- 502: Hals
- 503: Austrittsöffnung Kühlkanal
- 504: Spannut
- 601: Hauptschneide
- 602: Fläche
- 603: Kante
- 604: Spannut
- 605: Fläche
- 606: Kante
- 701: Freifläche
- 702: Hauptschneide
- 703: Fläche
- 704: Kante
- 705: Spannut
- 801: Fläche
- 802: Spannut
- 803: Hauptschneide
- 804: Kante
- 805: Kante
- 806: Fläche
- 901: Kühlkanal
- 902: Kreis
- 903: Mittelpunkt
- 1001: Hauptschneide
- 1002: Fläche
- 1003: Kante
- 1004: Spannut
- 1005: Kante
- 1006: Fläche
- 1101: Schneide
- 1102: Austrittsöffnung Kühlkanal
- 1103: Austrittsöffnung Kühlkanal
- 1104: Führungsfase
- 1105: Spannut
- 1201: Austrittsöffnung Kühlkanal
- 1202: Hals
- 1203: Einspannabschnitt
- 1204: Austrittsöffnung Kühlkanal
- 1205: Spannut
- 1206: Kante
- 1207: Fläche
- 1208: Kante
- 1209: Spannut
- 1301: Austrittsöffnung Kühlkanal
- 1302: Hals
- 1303: Austrittsöffnung Kühlkanal
- 1304: Spannut
- 1305: Kante
- 1306: Fläche
- 1307: Kante
- 1308: Hauptschneide
- 1309: Spannut
- 1401: Werkzeugschneide
- 1402: Querschnittsebene
- 1403: Austrittsöffnung Kühlmittelkanal
- 1404: Querschnittsebene
- 1405: Austrittsöffnung Kühlmittelkanal
- 1406: Spannut
- 1407: Spannut
- 1408: Werkzeugschneide
- 1501: Werkzeugschneide
- 1502: Querschnittsebene
- 1503: Austrittsöffnung Kühlmittelkanal
- 1504: Querschnittsebene
- 1505: Austrittsöffnung Kühlmittelkanal
- 1506: Querschnittsebene
- 1507: Querschnittsebene
- 1508: Spannut
- 1509: Spannut

## Patentansprüche

1. Hochleistungsreibahle zur Nachbearbeitung einer Bohrung eines Werkstücks, wobei die Hochleistungsreibahle umfasst: mindestens zwei Kühlkanäle (901) zur Versorgung von jeweils einer Spannut (1508, 1509), wobei die Kühlkanäle (901) im Wesentlichen entlang der Längsachse der Hochleistungsreibahle angeordnet sind, wobei die Kühlkanäle (901) dezentral ausgebildet sind, wobei jeweils zwei Kühlkanäle (901) mit einem Mittelpunkt (903) der Hochleistungsreibahle Winkel aufspannen, und wobei die Winkel 20°, 30°, 40°, 50°, 60°, 70°, 80°, 90° oder einen beliebigen Winkelwert aufweisen, wobei die Kühlkanäle (901) jeweils eine einzige Austrittsöffnung (1503, 1505) aufweisen, **dadurch gekennzeichnet, dass** die Spannuten in Richtung der Längsachse gestaffelt eingeschliffen sind und die Austrittsöffnungen (1503, 1505) sich gestaffelt in Richtung der Längsachse innerhalb der Spannuten (1508, 1509) ergeben.

## Claims

1. High-performance reamer for finishing a bore in a workpiece, wherein the high-performance reamer comprises: at least two cooling ducts (901) for supplying in each case one flute (1508, 1509), wherein the cooling ducts (901) are arranged substantially along the longitudinal axis of the high-performance reamer, wherein the cooling ducts (901) are formed off-centre, wherein in each case two cooling ducts (901) define an angle with a central point (903) of the high-performance reamer, and wherein the angles are 20°, 30°, 40°, 50°, 60°, 70°, 80°, 90° or have any desired angle value, wherein the cooling ducts (901) each have a single outlet opening (1503, 1505), **characterized in that** the flutes are ground in in a staggered manner in the direction of the longitudinal axis and the outlet openings (1503, 1505) ensue in a staggered manner in the direction of the longitudinal axis within the flutes (1508, 1509).

## Revendications

1. Alésoir de grande puissance pour le post-usinage d'un alésage d'une pièce, l'alésoir de grande puissance comprenant : au moins deux canaux de refroidissement (901) pour l'alimentation d'une rainure de copeaux respective (1508, 1509), les canaux de refroidissement (901) étant disposés essentiellement le long de l'axe longitudinal de l'alésoir de grande puissance, les canaux de refroidissement (901) étant réalisés de manière décentrée, deux canaux de refroidissement (901) formant à chaque fois un angle avec un centre (903) de l'alésoir de grande puissance et les angles valant 20°, 30°, 40°, 50°, 60°, 70°, 80°, 90° ou une valeur angulaire quelconque,
les canaux de refroidissement (901) présentant à chaque fois une ouverture de sortie unique (1503, 1505),
**caractérisé en ce que**
les rainures de copeaux sont meulées de manière échelonnée dans la direction de l'axe longitudinal et les ouvertures de sortie (1503, 1505) sont réalisées de manière échelonnée dans la direction de l'axe longitudinal à l'intérieur des rainures de copeaux (1508, 1509).
